# FASCICULE DE BREVET EUROPEEN

(11) **EP 1 168 785 B1**
(45) Date de publication et mention de la délivrance du brevet: **15.04.2015**
(21) Numéro de dépôt: 01401704.0
(22) Date de dépôt: 27.06.2001
(51) Int. Cl.: H04M 1/57, H04M 1/65, H04M 1/725

(54) **Réseau local de téléphonie radio et base radio économique pour ledit réseau**
Lokales drahtloses Fernsprechnetz und kostengünstige Funkbasisstation für das genannte Netz
Local wireless telephone network and low-cost radio base station for such a network

(30) Priorité: 27.06.2000 FR 0008233
(43) Date de publication de la demande: 02.01.2002
(73) Titulaire: SAGEMCOM BROADBAND SAS, 92500 Rueil Malmaison (FR)
(72) Inventeur: Baudoin, Georges, 75011 Paris (FR); Sabatier, Pierre, 95800 Cergy Saint Christophe (FR)
(74) Mandataire: Barbe, Laurent

(56) Documents cités:
- EP-A- 0 778 715
- EP-A- 0 798 909
- EP-A- 0 886 417
- WO-A-99/31857
- US-A- 5 655 218
- US-A- 5 703 934
- SIEMENS AG: 'Gigaset 2015 plus Bedienungsanleitung' 28 Octobre 1999, XP055001334

## Description

La présente invention concerne un réseau local de téléphonie radio, par exemple un réseau DECT, comprenant une base radio, reliée à un réseau téléphonique externe, et plusieurs combinés radios, appariés à la base par liaison radio.

Le combiné comporte une interface homme-machine (IHM), comprenant un microphone, un haut-parleur, un clavier de saisie et éventuellement un écran d'affichage. Le clavier permet à un utilisateur de décrocher la ligne, de composer un numéro d'appel, de raccrocher et éventuellement de consulter un annuaire téléphonique. L'écran est destiné à afficher diverses informations telles que les numéros composés à l'aide du clavier, le numéro d'appel, ou le nom, d'un correspondant appelant ainsi que les noms et les numéros de correspondant mémorisés dans l'annuaire. Le combiné constitue en définitive l'interface entre le réseau téléphonique local et l'utilisateur et permet à celui-ci d'effectuer des opérations téléphoniques.

La fonction primaire et essentielle de la base est d'être une passerelle entre le ou les combinés radios et le réseau téléphonique externe. Toutefois, cette base est généralement enrichie par d'autres fonctions. Elle peut notamment intégrer un répondeur enregistreur téléphonique et être, dans ce cas, dotée d'un pupitre comportant des touches de répondeur enregistreur (touche de lecture de message, touche de pause, touche d'avance, touche de retour, une touche d'arrêt et touche d'effacement de message) et/ou d'un écran d'affichage, destiné à afficher le nombre de messages reçus, le numéro d'ordre du message en cours de lecture, le numéro ou le nom de l'appelant ayant laissé ce message ainsi que la date et l'heure de réception de ce message. Ces nouvelles fonctions sont intéressantes pour l'utilisateur mais augmentent considérablement le coût de la base.

Un réseau comprenant une base radio et une pluralité de combinés est décrit par exemple par le document XP 055001334, "Gigaset 2015 plus".

La présente invention propose de réduire le coût de la base, sans réduire pour autant la priver de fonctions additionnelles.

A cet effet, l'invention concerne un réseau local de téléphonie radio comportant une base radio, comprenant une interface homme-machine avec des moyens de commande utilisateur pour commander l'exécution d'au moins une action, et plusieurs combinés radios et comprenant des moyens qui sont prévus pour, sur activation desdits moyens de commande de la base, afficher sur un écran d'un seul des combinés, des informations relatives à l'action commandée, la base comprenant des moyens agencés pour insérer lesdites informations relatives à l'action de la base dans un champ de service d'un canal de transmission radio entre la base et le combiné et pour transmettre, vers le combiné, les informations relatives à l'action commandée, avec une commande d'affichage, le combiné comprenant des moyens pour reconnaître la commande d'affichage, la base comprenant un chargeur de combiné et des moyens de détection de la présence d'un combiné dans le chargeur, lesdits moyens de commande d'affichage étant agencés pour, en cas de détection de la présence d'un combiné dans le chargeur, commander l'affichage des informations relatives à l'action commandée sur l'écran du combiné placé dans le chargeur, et la base comprenant en outre des moyens pour déterminer le combiné le plus proche de la base, les moyens de commande d'affichage étant agencés pour commander l'affichage des informations relatives à l'action commandée sur l'écran du combiné le plus proche lorsqu'aucun combiné n'est placé dans le chargeur.

Ainsi, la base dispose d'une fonction d'affichage, déportée sur le combiné, lui permettant d'afficher des informations relatives à une action commandée à l'aide de moyens de commande de la base. Grâce à cela, on peut supprimer l'écran de la base et utiliser l'écran déporté du combiné pour, dans le cas où un utilisateur commande l'exécution d'une action, à l'aide de moyens de commande de l'interface homme-machine de la base, afficher les informations relatives à cette action.

L'invention concerne également une base radio pour le réseau défini ci-dessus

Lorsqu'il active les premiers moyens de commande, d'exécution d'une action, de l'interface homme-machine de la base, l'utilisateur est situé à proximité de la base. S'il tient alors en main un combiné, la base détecte généralement qu'il s'agit du combiné le plus proche et commande l'affichage des informations relatives à l'action commandée sur l'écran de ce combiné.

L'invention sera mieux comprise à l'aide de la description suivante d'une forme de réalisation particulière du réseau téléphonique local de l'invention, en référence au dessin annexé sur lequel:
- la figure 1 représente un schéma du réseau de l'invention, selon la forme de réalisation particulière;
- la figure 2 représente un schéma bloc fonctionnel d'une base radio du réseau de la figure 1 et

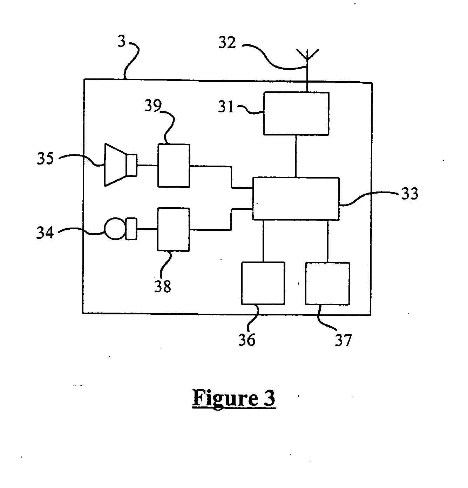

- la figure 3 représente un schéma bloc fonctionnel d'un combiné radio du réseau de la figure 1.

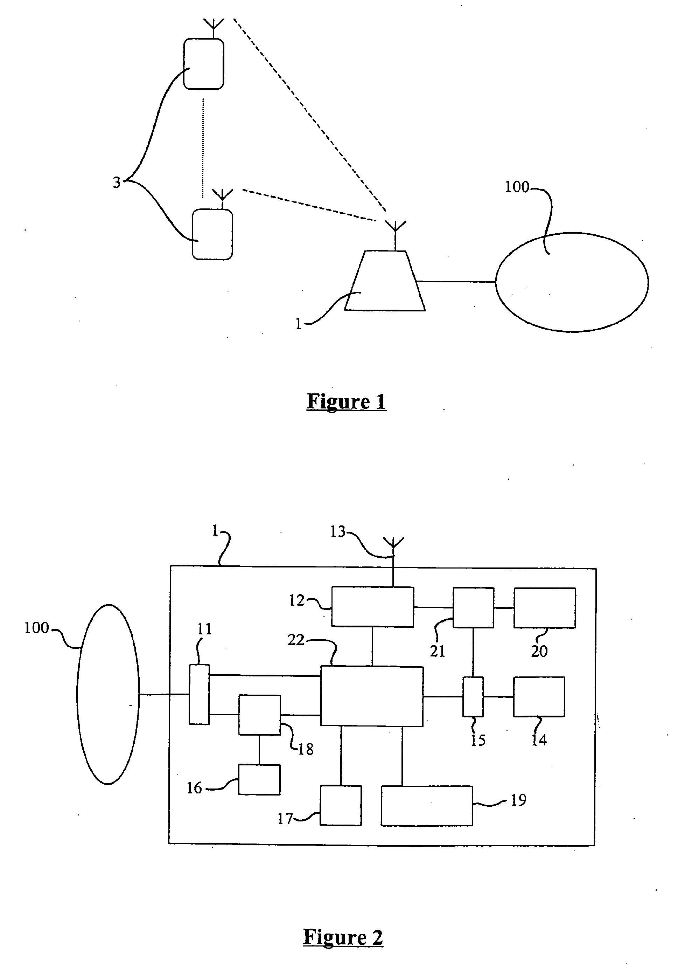

Le réseau téléphonique local, représenté sur la figure 1, comprend une base téléphonique radio 1, en l'espèce une base DECT, et une pluralité de combinés téléphoniques radios DECT 3 associés, pouvant se relier à la base 1 par liaison radio.

En référence à la figure 2, la base 1 comprend, de façon classique, une interface ligne 11 de liaison à un réseau téléphonique externe 100, en l'espèce le réseau téléphonique commuté RTC, un bloc radio DECT 12, un chargeur de combiné 14 et un bloc central de commande 22, ici un microprocesseur.

L'interface ligne 11 comprend une prise de connexion au réseau RTC 100.

Le bloc radio DECT 12, connecté à une antenne 13, permet à la base 1 de communiquer avec les combinés DECT 3, à travers des canaux de transmission radio, en utilisant le protocole de communication radio DECT. Selon le protocole DECT, chaque canal de transmission radio entre la base et l'un de ses combinés comprend un champ de service, destiné à véhiculer des informations de service et librement exploitable par les constructeurs.

Le chargeur 14 comprend un logement de réception d'un combiné 3 et des plots de chargement du combiné 3.

Un détecteur 15, relié aux plots de chargement du chargeur 14, est destiné à détecter la présence d'un combiné 3 dans le chargeur 14, par détection d'un courant de charge.

Une prise d'alimentation électrique, non représentée, permet de connecter la base 1 au secteur, pour son alimentation électrique.

La base 1 comprend en outre une horloge interne 16, une mémoire 17 de stockage d'un annuaire de correspondants, un module de répondeur enregistreur téléphonique 18, une interface homme-machine, comportant un pupitre 19, et un bloc 20 de commande d'affichage.

L'horloge 16 est destinée à fournir la date et l'heure.

L'annuaire de correspondants 17 contient une liste de noms de correspondant téléphonique et, pour chaque nom de correspondant, un numéro d'appel téléphonique associé.

Le module de répondeur enregistreur 18, connecté à l'interface ligne 11 et à l'horloge 16, est agencé pour, lors de la réception d'un appel entrant, prendre automatiquement la ligne, diffuser une annonce invitant l'appelant à laisser un message et, le cas échéant, enregistrer le message de l'appelant, et pour diffuser les messages reçus. Le module 18 est en outre destiné à mémoriser le numéro de chaque correspondant appelant, fourni par le réseau téléphonique 100, ou son nom dans le cas où le numéro d'appel reçu est mémorisé dans l'annuaire 17, ainsi que la date et l'heure de l'appel. Le nom du correspondant ainsi que la date et l'heure de l'appel pourraient également être fournis par le réseau téléphonique.

Le pupitre 19 comprend des touches de commande permettant à un utilisateur de commander l'exécution de diverses actions relatives à la fonction de répondeur enregistreur téléphonique de la base 1, en l'espèce une touche d'activation/désactivation du répondeur enregistreur, une touche de lecture des messages reçus, une touche d'avance pour passer d'un message au message suivant, une touche de retour pour passer d'un message au message précédent, une touche d'arrêt pour interrompre la lecture des messages et une touche d'effacement des messages.

Le bloc 20 de commande d'affichage est relié à un bloc 21 de sélection d'un combiné d'affichage 3, relié au bloc radio 12 et au détecteur 15. Ce bloc de sélection 21 est destiné à sélectionner, parmi les combinés 3, celui qui sera utilisé pour afficher des informations relatives à une action commandée à l'aide des touches de commande de la base 1, que l'on appellera par la suite le combiné d'affichage. Si un combiné 3 est placé dans le chargeur 14, le bloc de sélection 21 sélectionne ce combiné 3 comme combiné d'affichage. Sinon, le bloc de sélection 21 compare les niveaux d'énergie des différents signaux radios, respectivement transmis à la base 1 par les différents combinés radios, afin de déterminer le combiné 3 le plus proche, autrement dit celui émettant le signal de niveau le plus important, et sélectionne le combiné 3 le plus proche comme combiné d'affichage.

Le bloc de commande d'affichage 20 est destiné, sur appui par un utilisateur sur une touche de commande d'exécution d'une action du pupitre 19, autrement dit sur activation de cette touche et donc de la commande associée, à commander l'affichage d'informations relatives à cette action sur l'écran du combiné d'affichage 3, sélectionné par le bloc 21. Pour cela, sur activation de la touche de commande d'exécution d'une action du pupitre 19, sous la commande du bloc 20, le bloc DECT 12 établit un lien radio DECT avec le combiné d'affichage 3, à travers un canal de transmission radio, insère des informations relatives à l'action commandée et une commande d'affichage de ces informations, dans le champ de service du canal de transmission radio et transmet ainsi ces informations, avec la commande d'affichage, vers le combiné d'affichage 3.

Tous les éléments de la base 1 sont reliés au microprocesseur 22, qui est destiné à commander le fonctionnement de la base 1.

Chaque combiné DECT 3 comprend, de façon classique, un bloc radio DECT 31, une interface homme-machine et un bloc de commande 33, ici un microprocesseur.

L'interface homme-machine comprend un microphone 34, un haut-parleur 35, un clavier de saisie 36 et un écran d'affichage 37. Le microphone 34 et le haut-parleur 35 sont reliés au microprocesseur 33 respectivement par l'intermédiaire d'un convertisseur analogique/numérique (CAN) 38 et d'un convertisseur numérique/analogique (CNA) 39.

Le bloc radio DECT 31, connecté à une antenne radio 32, permet au combiné radio 3 de communiquer avec la base 1, à travers un canal de transmission radio, en utilisant le protocole de communication radio DECT. Le bloc DECT 31 est notamment agencé pour reconnaître et interpréter une commande d'affichage d'informations, transmise par la base 1 dans le champ de service du canal de transmission radio entre le combiné 3 et la base 1.

Tous les éléments décrits ci-dessus sont reliés au microprocesseur 33, qui est destiné à commander le fonctionnement du combiné 3. Le combiné 3 comprend en outre une batterie rechargeable d'alimentation, non représentée.

Le fonctionnement du réseau téléphonique local, et notamment l'utilisation du répondeur enregistreur téléphonique 18, vont maintenant être décrits.

En cas de réception d'un appel, le réseau téléphonique 100 transmet ici à la base 1 une signalisation d'identification de l'appelant, ou "CLIP", contenant le numéro d'appel téléphonique de l'appelant. Lorsque la fonction répondeur enregistreur de la base 1 est activée, si aucun utilisateur ne répond, le module de répondeur enregistreur 18 enregistre le numéro de l'appelant, décroche automatiquement la ligne, transmet à l'appelant, à travers le réseau téléphonique 100, une annonce l'invitant à laisser un message et, le cas échéant, enregistre le message de l'appelant, l'heure et la date de l'appel, fournies par l'horloge 16, et le numéro d'ordre de réception du message.

Pour écouter les messages reçus, un utilisateur du réseau local appuie sur la touche de lecture du pupitre 19, en commandant ainsi la lecture des messages enregistrés par le répondeur enregistreur 18 de la base 1.

La base 1 sélectionne ensuite l'un des combinés 3, afin de commander l'affichage d'informations, relatives au message lu, sur l'écran 37 de ce combiné 3.

Dans le cas où un combiné DECT 3 est placé dans le chargeur 14 de la base 1, le détecteur 15 détecte sa présence et en informe le bloc de sélection 21 qui sélectionne alors le combiné 3, placé dans le chargeur 14, pour faire fonction de combiné d'affichage.

Dans le cas où aucun combiné DECT 3 n'est placé dans le chargeur 14, la base 1 émet des signaux radios de balise. Sur réception de ces signaux, chacun des combinés DECT 3, situé dans la zone de couverture de la base 1, transmet à celle-ci un signal radio de présence. Le bloc de sélection 21 de la base 1 compare alors les niveaux d'énergie des différents signaux de présence reçus et sélectionne le combiné 3 ayant émis le signal de niveau le plus important, autrement dit le combiné le plus proche de la base 1, pour qu'il joue le rôle de combiné d'affichage. On soulignera ici que, dans le cas où le chargeur 14 est vide et où l'utilisateur, qui appuie sur une touche du pupitre 19 et, de ce fait, est nécessairement situé à proximité de la base 1, tient en main l'un des combinés 3, la base 1 sélectionne généralement ce combiné 3 comme combiné d'affichage, car il se trouve à proximité de la base 1.

Après avoir sélectionné le combiné d'affichage 3, sous la commande du bloc 20 de commande d'affichage 20, la base 1 établit un lien radio DECT avec le combiné d'affichage 3, en utilisant un canal de transmission radio, et insère, dans le champ de service de ce canal, des informations relatives à l'action commandée, à savoir la lecture d'un message, et une commande d'affichage de ces informations, et les transmet vers le combiné 3. Les informations, dont l'affichage est ainsi commandé par la base 1, contiennent ici le numéro d'ordre du message, le numéro, ou le nom, de l'appelant ainsi que la date et l'heure de l'appel. Sur réception de ces informations et sur reconnaissance de la commande d'affichage reçue, le combiné 3 affiche les informations relatives au message sur son écran 37.

La base 1 commande ainsi l'affichage d'informations relatives à chaque message lu, sur activation de la commande de lecture de ce message du pupitre 19. La base 1 commande également l'affichage de telles informations, sur activation de la touche d'avance et de la touche de retour, commandant respectivement la lecture du message suivant et du message précédent.

L'interface homme-machine de la base 1 pourrait comprendre d'autres moyens de commande d'exécution d'une action. Le pupitre 19 pourrait par exemple comprendre un navigateur permettant à un utilisateur de faire défiler les noms de correspondant de l'annuaire 17 sur l'écran 37 d'un combiné 3 et de sélectionner l'un de ces noms afin de lancer un appel vers le numéro associé, ou encore une touche spécifique pour faire défiler, sur l'écran 37 d'un combiné 3, les numéros, ou les noms, des correspondants ayant appelé en l'absence de l'utilisateur.

Dans la description qui précède, pour l'affichage des informations relatives à l'action commandée par l'utilisateur à l'aide des moyens de commande de l'interface homme-machine de la base 1, celle-ci sélectionne de préférence le combiné 3 se trouvant dans son chargeur 14 et, dans le cas où le chargeur 14 est vide, elle sélectionne le combiné 3 le plus proche. On pourrait toutefois sélectionner le combiné d'affichage d'une manière différente. On pourrait par exemple envisager que l'utilisateur sélectionne lui-même le combiné d'affichage, par sélection d'une commande correspondante.

En variante, la base pourrait être configurée, programmée en usine, lors de sa fabrication, pour commander l'affichage des informations relatives à une action commandée sur un combiné spécifique.

Au lieu de commander l'affichage, sur l'écran 37 de l'un seul des combinés 3, des informations relatives à une action commandée à l'aide des moyens de commande 19 de la base 1, celle-ci pourrait être agencée pour commander l'affichage de ces informations sur l'écran 37 de chacun des combinés 3.

On soulignera que dans les deux dernières variantes de réalisation, explicitées ci-dessus, sont réalisables très simplement, sans modification importante de la base.

Bien entendu, la base radio pourrait être relié à tout type de réseau téléphonique, comme par exemple le réseau RNIS.

## Revendications

1. Réseau local de téléphonie radio comportant une base radio (1), comprenant une interface homme-machine avec des moyens de commande utilisateur (19) pour commander l'exécution d'au moins une action, et plusieurs combinés radios (3), **caractérisé par le fait que** :
- des moyens (20, 12, 13, 31) sont prévus pour, sur activation desdits moyens de commande de la base (1), afficher sur un écran (37) d'un seul des combinés (3), des informations relatives à l'action commandée, la base (1) comprenant des moyens (20, 12, 13) agencés pour insérer lesdites informations relatives à l'action de la base (1) dans un champ de service d'un canal de transmission radio entre la base (1) et le combiné et pour transmettre, vers le combiné (3), les informations relatives à l'action commandée, avec une commande d'affichage, le combiné (3) comprenant des moyens (31) pour reconnaître la commande d'affichage,
- la base comprenant un chargeur de combiné (14) et des moyens (15) de détection de la présence d'un combiné (3) dans le chargeur (14), lesdits moyens (20) de commande d'affichage étant agencés pour, en cas de détection de la présence d'un combiné (3) dans le chargeur (14), commander l'affichage des informations relatives à l'action commandée sur l'écran (37) du combiné (3) placé dans le chargeur (14), et
- la base comprenant en outre des moyens (21) pour déterminer le combiné le plus proche de la base (1), les moyens (20) de commande d'affichage étant agencés pour commander l'affichage des informations relatives à l'action commandée sur l'écran (37) du combiné (3) le plus proche lorsqu'aucun combiné n'est placé dans le chargeur.

2. Base radio pour le réseau de la revendication 1, associée à plusieurs combinés radios (3) et comprenant une interface homme-machine avec des premiers moyens de commande utilisateur (19) pour commander l'exécution d'au moins une action, **caractérisée par le fait qu'**elle comprend des seconds moyens (20) de commande d'affichage pour, sur activation des premiers moyens de commande, commander l'affichage d'informations relatives à l'action commandée sur un écran (37) d'un seul des combinés (3), les seconds moyens (20) de commande d'affichage étant agencés pour insérer lesdites informations relatives à l'action de la base (1) dans un champ de service d'un canal de transmission radio entre la base (1) et le combiné et destinés à transmettre, vers le combiné (3), des informations relatives à l'action commandée et une commande d'affichage desdites informations,
- un chargeur de combiné (14) et des moyens (15) de détection de la présence d'un combiné (3) dans le chargeur (14) y étant prévus, les seconds moyens (20) de commande d'affichage sont agencés pour, en cas de détection de la présence d'un combiné (3) dans le chargeur (14), commander l'affichage des informations relatives à l'action commandée sur l'écran (37) du combiné (3) placé dans le chargeur (14), et
- des moyens (21) pour déterminer le combiné le plus proche de la base (1) et les seconds moyens (20) de commande d'affichage sont agencés pour commander l'affichage des informations relatives à l'action commandée sur l'écran (37) du combiné (3) le plus proche lorsqu'aucun combiné n'est placé dans le chargeur..

3. Base selon la revendication 2, ladite base (1) comprenant en outre un répondeur enregistreur (18) et dans laquelle l'action commandée est une lecture des messages enregistrés par ledit répondeur enregistreur (18) de la base (1).

4. Base selon la revendication 2 ou 3, ladite base (1) comprenant en outre une mémoire (17) de stockage d'un annuaire de correspondants, les moyens de commande utilisateur (19) comprenant en outre un navigateur permettant à un utilisateur de faire défiler les noms de correspondant de l'annuaire (17) sur l'écran (37) du combiné (3) et de sélectionner l'un de ces noms afin de lancer un appel vers le numéro associé.

5. Base selon l'une des revendications 2 à 4, dans laquelle les moyens de commande utilisateur (19) comprennent une touche spécifique pour faire défiler, sur l'écran (37) d'un combiné (3), les numéros, ou les noms, des correspondants ayant appelé en l'absence de l'utilisateur.

## Patentansprüche

1. Lokales Funktelefonnetz, das eine Funkbasis (1), die eine Mensch-Maschine-Schnittstelle mit Benutzerbefehlsmitteln (19) zum Befehlen der Ausführung von mindestens einem Vorgang umfasst, und mehrere Funkhandgeräte (3) umfasst, **dadurch gekennzeichnet, dass**:
- die Mittel (20, 12, 13, 31) vorgesehen sind, um bei der Aktivierung der Befehlsmittel der Basis (1) auf einem Bildschirm (37) von einem einzigen der Handgeräte (3) Informationen über den befohlenen Vorgang anzuzeigen, wobei die Basis (1) Mittel (20, 12, 13) umfasst, die eingerichtet sind, um die Informationen über den Vorgang der Basis (1) in einem Dienstfeld eines Funkübertragungskanals zwischen der Basis (1) und dem Handgerät einzugeben und um die Informationen über den befohlenen Vorgang mit einem Anzeigebefehl in Richtung des Handgeräts (3) zu übertragen, wobei das Handgerät (3) Mittel (31) zum Erkennen des Anzeigebefehls umfasst,
- wobei die Basis ein Handgerät-Ladegerät (14) und Mittel (15) zur Ermittlung des Vorhandenseins eines Handgeräts (3) in dem Ladegerät (14) umfasst, wobei die Mittel (20) zum Befehlen der Anzeige eingerichtet sind, um im Fall der Ermittlung des Vorhandenseins eines Handgeräts (3) in dem Ladegerät (14) die Anzeige der Informationen über den befohlenen Vorgang auf dem Bildschirm (37) des Handgeräts (3) zu befehlen, das in dem Ladegerät (14) untergebracht ist, und
- die Basis ferner Mittel (21) zum Bestimmen des Handgeräts umfasst, das sich am nächsten an der Basis (1) befindet, wobei die Anzeigebefehlsmittel (20) eingerichtet sind, um die Anzeige der Informationen über den befohlenen Vorgang auf dem Bildschirm (37) des Handgeräts (3) zu befehlen, das sich am nächsten befindet, wenn kein Handgerät in dem Ladegerät untergebracht ist.

2. Funkbasis für das Netz nach Anspruch 1, die mehreren Funkhandgeräten (3) zugehörig ist und eine Mensch-Maschine-Schnittstelle mit ersten Benutzerbefehlsmitteln (19) zum Befehlen der Ausführung von mindestens einem Vorgang umfasst, **dadurch gekennzeichnet, dass** sie zweite Anzeigebefehlsmittel (20) umfasst, um bei der Aktivierung der ersten Befehlsmittel die Anzeige von Informationen über den befohlenen Vorgang auf einem Bildschirm (37) von einem einzigen der Handgeräte (3) zu befehlen, wobei die zweiten Anzeigebefehlsmittel (20) eingerichtet sind, um die Informationen über den Vorgang der Basis (1) in einem Dienstfeld eines Funkübertragungskanals zwischen der Basis (1) und dem Handgerät einzugeben und dazu bestimmt sind, die Informationen über den befohlenen Vorgang und einen Befehl zur Anzeige der Informationen in Richtung des Handgeräts (3) zu übertragen,
- ein Handgerät-Ladegerät (14) und Mittel (15) zur Ermittlung des Vorhandenseins eines Handgeräts (3) in dem Ladegerät (14), die darin vorgesehen sind, die zweiten Mittel (20) zur Anzeigesteuerung eingerichtet sind, um im Fall der Ermittlung des Vorhandenseins eines Handgeräts (3) in dem Ladegerät (14) das Anzeigen der Informationen über den befohlenen Vorgang auf dem Bildschirm (37) des in dem Ladegerät (14) untergebrachten Handgeräts (3) zu befehlen, und
- Mittel (21) zum Bestimmen des Handgeräts, das sich am nächsten an der Basis (1) befindet, und die zweiten Anzeigebefehlsmittel (20) eingerichtet sind, um das Anzeigen der Informationen über den befohlenen Vorgang auf dem Bildschirm (37) des am nächsten gelegenen Handgeräts (3) zu befehlen, wenn kein Handgerät in dem Ladegerät untergebracht ist.

3. Basis nach Anspruch 2, wobei die Basis (1) ferner einen Anrufbeantworter mit Rufaufzeichnung (18) umfasst, und wobei der befohlene Vorgang ein Lesen der durch den Anrufbeantworter mit Rufaufzeichnung (18) der Basis (1) aufgezeichneten Nachrichten ist.

4. Basis nach Anspruch 2 oder 3, wobei die Basis (1) ferner einen Speicher (17) zum Speichern eines Verzeichnisses von Gesprächsteilnehmern umfasst, wobei die Benutzerbefehlsmittel (19) ferner einen Navigator umfassen, der es einem Benutzer ermöglicht, die Gesprächsteilnehmernamen des Verzeichnisses (17) auf dem Bildschirm (37) des Handgeräts (3) zu scrollen und einen dieser Namen auszuwählen, um einen Anruf an die zugehörige Nummer zu tätigen.

5. Basis nach einem der Ansprüche 2 bis 4, wobei die Benutzerbefehlsmittel (19) eine spezifische Taste umfassen, um auf dem Bildschirm (37) eines Handgeräts (3) die Nummern oder die Namen der Gesprächsteilnehmer zu scrollen, die in Abwesenheit des Benutzers angerufen haben.

## Claims

1. Local wireless telephone network comprising a radio base (1), which has a man-machine interface having user control means (19) for controlling the execution of at least one action, and a plurality of cordless handsets (3), **characterised in that**:
- means (20, 12, 13, 31) are provided to display, when said control means of the base (1) are activated, information relating to the controlled action on a screen (37) of just one of the handsets (3), the base (1) comprising means (20, 12, 13) arranged for entering said information relating to the action of the base (1) in a utility field of a radio transmission channel between the base (1) and the handset, and for transmitting to the handset (3) the information relating to the controlled action together with a display command, the handset (3) comprising means (31) for recognising the display command,
- the base comprising a handset charger (14) and means (15) for detecting the presence of a handset (3) in the charger (14), said display control means (20) being arranged to control, if a handset (3) is detected in the charger (14), the display of the information relating to the controlled action on the screen (37) of the handset (3) placed in the charger (14), and
- the base further comprising means (21) for determining the handset closest to the base (1), the display control means (20) being arranged to control the display of the information relating to the controlled action on the screen (37) of the closest handset (3) when no handset is placed in the charger.

2. Radio base for the network in claim 1, which is connected to a plurality of cordless handsets (3) and comprises a man-machine interface having first user control means (19) for controlling the execution of at least one action, **characterised in that** said base comprises second display control means (20) for controlling, upon activation of the first control means, the display of information relating to the controlled action on a screen (37) of just one of the handsets (3), the second display control means (20) being arranged for entering said information relating to the action of the base (1) in a utility field of a radio transmission channel between the base (1) and the handset, and being designed to transmit to the handset (3) both the information relating to the controlled action and a display command for said information,
- a handset charger (14) and means (15) for detecting the presence of a handset (3) in the charger (14) being provided therein, the second display control means (20) being arranged to control, if a handset (3) is detected in the charger (14), the display of the information relating to the controlled action on the screen (37) of the handset (3) placed in the charger (14), and
- means (21) for determining the handset closest to the base (1) and the second display control means (20) being arranged to control the display of the information relating to the controlled action on the screen (37) of the closest handset (3) when no handset is placed in the charger.

3. Base according to claim 2, said base (1) further comprising a voice-message recorder (18) and wherein the controlled action is a read-out of the messages recorded by said voice-message recorder (18) of the base (1).

4. Base according to either claim 2 or claim 3, said base (1) further comprising a memory (17) for storing a directory of contacts, the user control means (19) further comprising a navigator to allow a user to scroll through the names of the contacts in the directory (17) on the screen (37) of the handset (3) and to select one of said names in order to call the associated number.

5. Base according to any of claims 2 to 4, wherein the user control means (19) comprise a specific button for scrolling, on the screen (37) of a handset (3), through the numbers or names of the contacts who have called while the user was not present.
